# EUROPEAN PATENT SPECIFICATION

(11) **EP 1 634 747 B1**
(45) Date of publication and mention of the grant of the patent: **02.04.2008**
(21) Application number: 03725215.2
(22) Date of filing: 20.05.2003
(51) Int. Cl.: B60J 7/02, B60J 7/057

(54) **SUNROOF SUPPORT FRAME FOR MOTOR VEHICLE**
SCHIEBEDACHSTÜTZRAHMEN FÜR EIN KRAFTFAHRZEUG
CADRE SUPPORT DE TOIT OUVRANT POUR VEHICULES AUTOMOBILES

(43) Date of publication of application: 15.03.2006
(73) Proprietor: GRUPO ANTOLIN-INGENIERIA, S.A., 09007 Burgos (ES)
(72) Inventor: PEREZ OCA, Ricardo, E-09007 Burgos (ES); SOTO ROMERO, Dario, E-47007 Valladolid (ES); ALONSO AUSIN, Gisleno, E- 09195 Villariezo-Burgos (ES)
(74) Representative: Esteban Perez-Serrano, Maria Isabel
(86) International application number: PCT/ES2003/000224
(87) International publication number: WO 2004/103752

(56) References cited:
- EP-A- 1 279 537
- DE-A- 4 012 635
- DE-A- 4 313 687
- US-A- 5 048 890
- US-A- 5 104 178
- US-A- 5 332 282

## Description

The invention relates to a sunroof with supporting frame for automobile, in which frame run sliding elements meant to open or close said sunroofs when actuated by the corresponding mechanism.

Currently, practically all sunroof actuation mechanisms are driven by a push-pull cable.

There exist variations of the push-pull cable, in which the element that transmits the motion can be different, such as a toothed element with racks, toothed belts, etc. and others such as worm gears.

With respect to the frame that supports the mechanisms and provides an attachment to the vehicle body, there are currently several manufacturing solutions.

In some systems the lateral guides are made by extrusion separately from the front piece, which is made by injection. The guides are metallic and are machined later and attached to the plastic front piece as shown in US-A-5 104 178.

In other systems a continuous metal frame is extruded. In a subsequent process, the excess material in the corners is cut and the corners are bent until they adopt the U shape of these supporting frames.

These solutions use a push-pull cable in their majority and require the supporting frame to include a channel in which the push-pull cable will be guided.

Likewise, all solutions currently known require a subsequent machining of the supporting frame in order to provide all the orifices needed and give it the required outer shape.

In the specific case of solutions extruded and later bent it is necessary to add an additional front piece to act as a weatherboard.

In all known cases, the lateral and front weatherboards are not continuous and must be joined, potentially compromising water tightness.

In addition, it is always necessary to add parts subsequently to close the weatherboards on their rear area and channel the water collected to direct it to the outside.

It is also necessary to use several parts that act as stops for the pivots used in the mechanism.

One object of the invention is a supporting frame for automobile sunroofs that is injectable and is made of a single part, without requiring any subsequent machining, with a specific design adapted to cable traction systems.

Another object of the invention is a supporting frame with a geometry of the lateral sliding element guides designed to allow obtaining it in a mould.

A further object of the invention is a supporting frame that allows to mount the sliding elements in a vertical sense, by virtue of grooves established in parts of the surface of the rear ends of the lateral guides.

To attain these objectives, the supporting frame of the invention is made by injection of either plastic or aluminium alloy, so that the frame will configure the front piece and the lateral sliding element guides. The frame is therefore made of a single piece and is obviously manufactured in a single process, without requiring any subsequent machining, riveting, soldering, gluing etc.

The front part of the frame incorporates a projection adapted to allow attaching the cable actuation motor to it. This projection also acts as a cover for the cable drum connected to the motor.

The frame thus constructed does not require any guide channels, as the traction is provided by a cable that follows a straight line between several rerouting points provided in said frame.

These cable rerouting points are normally located at the corners of the frame. However, in cases where the sunroof has a high curvature or when the cable interferes with other components, it is also possible to establish intermediate reroutings that leave the cable free and following a straight line between all such rerouting points.

The supporting frame made of a single piece obviously does not require any operation to join the front piece to the guides or for the weatherboards, thereby fully ensuring its water tightness.

The sliding elements that run along the sides and that produce the movement of the sunroof are advantageously mounted on said sides in a vertical sense, for which purpose grooves are provided in horizontal segments of the rear ends of the sides.

The supporting frame of the invention can be made of a plastic material or a metal alloy as may be convenient.

In the case that the injected supporting frame is made of a plastic material, the water outlets and drain tubes will be obtained at the same time as the frame itself, together with the stops for the mechanism.

Therefore, in this option no auxiliary parts are needed except for the bushings for attachment to the automobile body and crossbars in cases where they are required.

In the case of an injected supporting frame made from a metal alloy, an undesirable friction may appear between the cable and the frame in the reroutings. To solve this drawback, auxiliary parts are clipped onto the frame in orifices of said frame provided for this purpose. These reroutings can also incorporate the drainage ducts depending on their exact location.

A frame constructed according to the present invention will also provide a significant reduction in the weight of the assembly, greater space for mounting the actuation mechanism for the mobile panel and a greater ease of recycling of the frame as it is made of a single material.

The invention can be seen in greater detail and precision in the accompanying drawings, which represent a practical embodiment of the invention as follows:
Figure 1 shows a perspective view of a frame according to the invention.
Figure 2 shows an enlarged detailed view of one of the front corners of the frame of figure 1.
Figure 3 shows a perspective view of the front part of the frame, seen from below, according to the invention.
Figure 4 shows a detailed view of the end of the sides of the frame, according to the invention.
Figure 5 shows a detail of the bottom of the support frame made of injected plastic according to the invention.

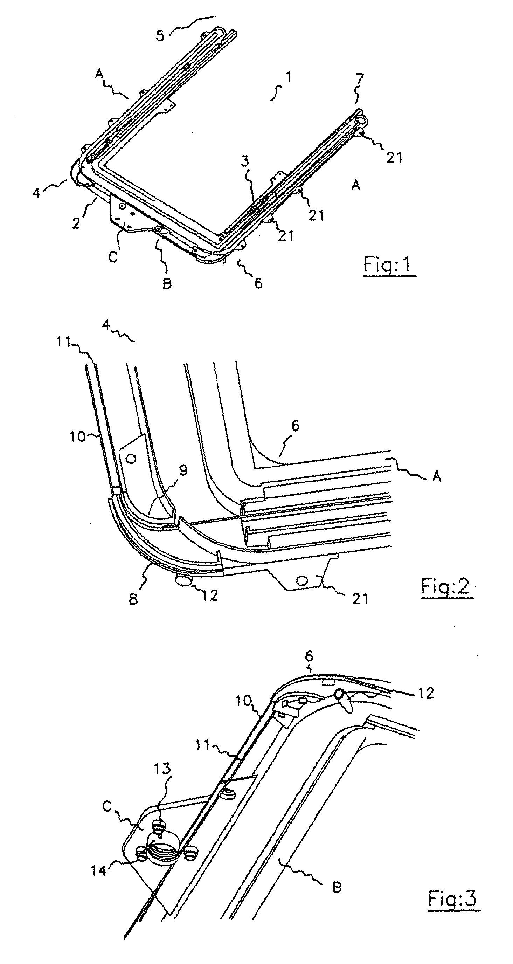

According to figure 1, a support frame (1) can be seen that incorporates some of the elements that constitute the sunroof. Among these elements is the sliding element (3) on one of the sides (A). These sides physically configure the frame together with the front (B).

The support frame is made of a single piece, and includes in this representation the cable (2) as a traction element. The cable arrives from the corresponding drum-motor assembly located under the extrusion (C) of the central part of the front (B).

The four ends (4, 6) of the front (B) and (5, 7) of the sides (A) incorporate the corresponding reroutings of the cable (2). The sides (A) and the front (B) are provided with orifices (21) for attachment to the body. Figure 1 only shows the orifices of one of the sides for purposes of clarity.

The cable (2) is constituted by three cable segments. The first segment runs from the motor drum to one of the traction sliding elements (3) passing a rerouting channel at the corner (4). The end of this cable joined to the sliding element (3) has a spring that maintains the cable tension within its working range.

Another cable segment runs from the aforementioned sliding element to the rerouting channel at the corner (4). The end of this cable coupled to the sliding element (3) has a spring that maintains the cable tension within its working range.

Another cable segment runs from the aforementioned sliding element to the rerouting channel of the end (5), returning to the corner (4). At this corner it passes another rerouting channel, different from the previously mentioned channel, reaching the other corner (6) at which it passes though the corresponding rerouting until it is attached to a lug in a housing of said second traction sliding element. No springs are mounted at any end of this cable.

The third cable segment starts at the last sliding element with a spring coupled at its start, passes the rerouting of the end (7) of the side towards the front end (6) where another rerouting different from the aforementioned one is joined to the motor drum, closing the circuit.

In figure 2 it is worth noting the corner (6) of one of the fronts with the third cable segment (10) that connects the sliding element to the drum by rerouting the end (7) of the side. This cable segment (10) passes the rerouting (8) at this side.

The second cable (11) that arrives from the other front corner (4) and runs towards the sliding element passes the rerouting (9) at this corner (6).

Naturally, the front end (4) of the supporting frame is provided with another two reroutings through which the first and second cable segments will pass.

Also worth noting in figure 2 is the drain tube (12) obtained in the injection, perfectly integrated in the supporting frame (1), as well as one of the orifices (21) for attaching it to the body. Through these orifices pass screws that anchor said frame provided with metal inserts in the form of bushings.

Figure 3 shows the bottom face of the extrusion (C), in which the drum cover (14) can be seen to be integrated in the supporting frame, as well as the attachment points (13) for the motor, not shown.

Figure 3 also shows the position of the aforementioned cables (10, 11), where cable segment (10) passes the position of the drum and cable (11) runs towards the opposite front corner.

The position of the drain tube (12) is also perfectly visible in figure 3.

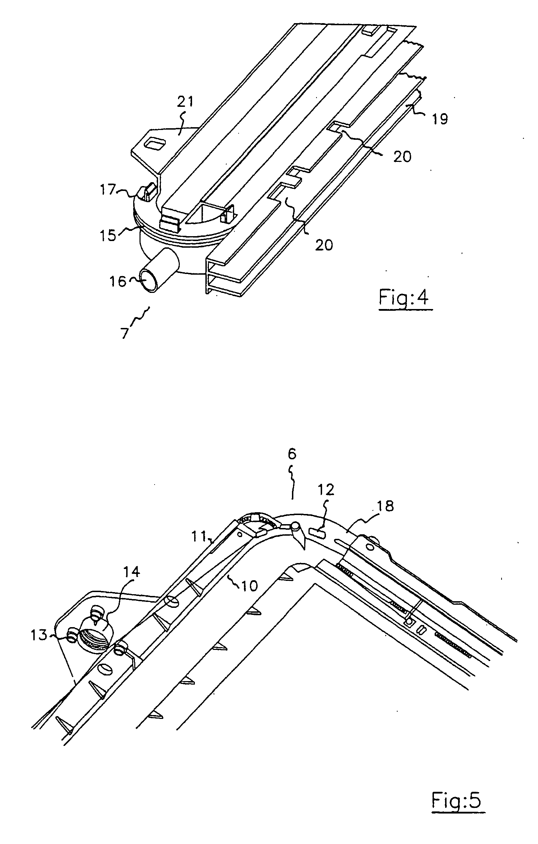

The metal alloy version shown in figure 4 represents the corner (7) of one of the sides (A) of the supporting frame, with the rerouting (15) for the cable and the drain tube (16).

In this example of embodiment the rerouting and the drain tube form part of an auxiliary piece that is clipped onto the frame by tabs (17) provided in said piece, which fit in orifices made in the frame *ad hoc.* The rerouting may be simple or double, with one or two channels for the cable depending on its position at the corners (4, 6) or the ends (5, 7).

Naturally, as stated above, in the case of a supporting frame made of injected plastic the differentiated auxiliary part will not exist, as it is generated directly in the injection.

Continuing with reference to figure 4, the channels (19) of the supporting frame are shown in which run the sliding element tabs and the mobile lining, as well as the gasket between the lining and the frame of the opening.

Also shown are the orifices (20) laterally provided on the sides of the supporting frame, specifically in the upper horizontal walls of the channels (21), which allow to mount the sliding elements in a vertical sense.

With respect to figure 5, which shows details similar to those of figure 3, the solution of a supporting frame made of plastic is further described in which turrets (18) define reroutings at the ends of the channels in which the cables run, in this case the cables (10, 11) in the corner (6) of the frame.

Other formations with similar turrets (18) are provided in the other corner (4) of the frame, as well as on the ends (5, 7) of the sides (A).

## Claims

1. Sunroof with supporting frame for automobile, provided with an assembly formed by a front (B) and two sides (A) at each end of said front in which run sliding elements (3), these sliding elements being driven by a cable acting as a drive element or by similar means, and which run along a guide channel of the frame itself, the supporting frame being provided with a front part added as a water drainage area, stops for the mechanism pivots and tabs for attaching the frame itself to the vehicle body
**characterised in that**
- the supporting frame (1) is made by injection in a single piece, including the front (B), the two sides (A), a centred extension (C) of said front, protrusions (21) with orifices for attachment to the vehicle body, stops for the mechanism pivots,
- the drive element of the sliding elements (3) is a cable (2),
- the extension (C) of the front receives the drive motor, attached to it at areas (13), also acting as a cover (14) for the cable drum,
- the cable (2) runs freely from the cable drum between the sliding elements (3) and the corners (4, 6) of the front (B) and the ends (5, 7) of the sides, at the corners and ends of which are provided reroutings for said cable,
- the ends (5, 7) of the sides are provided with lateral channels with recesses (20) made in their upper horizontal walls by which the sliding elements (3) are mounted in a vertical sense.

2. Sunroof with supporting frame for automobile as claimed in claim 1, **characterised in that** when the supporting frame is made of plastic the cable reroutings and the drain tubes (12) form a single element with the frame itself.

3. Sunroof with supporting frame for automobile sunroofs as claimed in claim 1, **characterised in that** when the supporting frame is made of a metal alloy the reroutings (15) and the drain tubes (16) form part of auxiliary pieces that contain both and are clipped by tabs (17) onto orifices made in the frame.

4. Sunroof with supporting frame for automobile as claimed in claim 1, **characterised in that** the cable (2) is composed of three cable segments: a first segment that runs from the drum to one of the sliding elements (3), passing by the rerouting of the front corner (4) and with a spring at the end connected to the sliding element; a second segment (11) coupled to the sliding element (3) that passes a rerouting (5) of a side, continuing to another rerouting at the corner (4), different from the aforementioned one, then continuing to the other front corner (6) where it is connected by the corresponding rerouting to the other sliding element; and a third cable segment (10) that runs from this latter sliding element with a spring coupled to it and passes the rerouting (7) of this side, returning to another rerouting at the front corner (6), different from the aforementioned one.

5. Sunroof with supporting frame for automobile as claimed in the previous claims **characterised in that** other intermediate reroutings are provided in addition to those of the front corners and the ends of the sides, when necessary.

## Patentansprüche

1. Schiebedachstützrahmen für ein Kraftfahrzeug, der mit einer Baugruppe ausgestattet ist, die aus einer Vorderseite (B) und zwei Seiten (A) an jedem Ende der besagten Vorderseite gebildet wird, in denen Gleitelemente (3) laufen, wobei diese Gleitelemente von einem als Antriebselement wirkenden Kabel oder von ähnlichen Mitteln angetrieben werden, und die entlang einem Führungskanal des Rahmens selbst laufen, wobei der Stützrahmen mit einem Vorderteil, das als Wasserablaufbereich hinzugefügt wurde, Anschlägen für die Stifte des Mechanismus und Laschen zur Befestigung des Rahmens selbst auf den Fahrzeugaufbau ausgestattet ist
**dadurch gekennzeichnet, dass**
- der Stützrahmen (1) mittels Einspritzung aus einem einzigen Stück gefertigt wird, einschließlich der Vorderseite (B), der beiden Seiten (A), einer zentrierten Verlängerung (C) der besagten Vorderseite, Vorsprüngen (21) mit Öffnungen zur Befestigung an dem Fahrzeugaufbau, Anschlägen für die Stifte des Mechanismus,
- das Antriebselement der Gleitelemente (3) ein Kabel (2) ist,
- die Verlängerung (C) der Vorderseite den Antriebsmotor aufnimmt, der mit dieser an Bereichen (13) befestigt ist, und die auch als Abdeckung (14) für die Kabeltrommel wirkt,
- das Kabel (2) frei von der Kabeltrommel zwischen den Gleitelementen (3) und den Ecken (4, 6) der Vorderseite (B) und den Enden (5, 7) der Seiten läuft, an den Ecken und Enden derselben Umleitungen für das besagte Kabel vorgesehen sind,
- die Enden (5, 7) der Seiten mit seitlichen Kanälen mit Einbuchtungen (20) ausgestattet sind, die in deren oberen horizontalen Wänden ausgeführt sind, durch die die Gleitelemente (3) in einer vertikalen Richtung montiert werden.

2. Schiebedachstützrahmen für ein Kraftfahrzeug nach Anspruch 1, **dadurch gekennzeichnet, dass**, wenn der Stützrahmen aus Kunststoff gefertigt ist, die Kabelumlenkungen und die Abflussleitungen (12) ein einziges Element mit dem Rahmen selbst bilden.

3. Schiebedachstützrahmen für ein Kraftfahrzeug nach Anspruch 1, **dadurch gekennzeichnet, dass**, wenn der Stützrahmen aus einer Metalllegierung gefertigt ist, die Umlenkungen (15) und die Abflussleitungen (16) Teil eines Hilfsteils bilden, das beide enthält und mit Laschen (17) auf in dem Rahmen durchgeführten Öffnungen geklammert ist.

4. Schiebedachstützrahmen für ein Kraftfahrzeug nach Anspruch 1, **dadurch gekennzeichnet, dass** das Kabel (2) aus drei Kabelsegmenten besteht: einem ersten Segment, das von der Kabeltrommel zu einem der Gleitelemente (3) läuft, wobei dieses durch die Umlenkung der vorderen Ecke (4) läuft und eine Feder am Ende besitzt, die mit dem Gleitelement verbunden ist; einem zweiten Segment (11), das mit dem Gleitelement (3) verbunden ist, das durch eine Umlenkung (5) einer Seite läuft, zu einer anderen, von der vorher erwähnten unterschiedlichen Umlenkung an der Ecke (4) fortläuft, dann zu der anderen vorderen Ecke (6) fortläuft, wo es mit der entsprechenden Umlenkung zu dem anderen Gleitelement verbunden ist; und einem dritten Kabelsegment (10), das von diesem letzteren Gleitelement mit einer daran befestigten Feder läuft und die Umlenkung (7) dieser Seite passiert, und zu einer anderen, von der vorher erwähnten unterschiedlichen Umlenkung an der vorderen Ecke (6) zurückkehrt.

5. Schiebedachstützrahmen für ein Kraftfahrzeug nach den vorherigen Ansprüchen, **dadurch gekennzeichnet, dass** andere Zwischenumlenkungen zusätzlich zu denen der vorderen Ecken und den Enden der Seiten falls erforderlich vorgesehen sind.

## Revendications

1. Toit ouvrant avec cadre de support pour véhicule automobile, constitué d'un ensemble formé d'une face avant (B) et de deux côtés (A) à chaque extrémité de ladite face avant dans lesquels passent des éléments coulissants (3), ces éléments coulissants étant entraînés par un câble agissant comme un élément d'entraînement ou par des organes similaires, et qui passent le long d'un canal de guidage du cadre lui-même, le cadre de support étant constitué d'une partie frontale ajoutée comme zone d'écoulement de l'eau, de pièces d'arrêt pour les pivots du mécanisme et de pattes d'attache pour fixer le cadre lui-même au corps du véhicule
**caractérisé en ce que**
- le cadre de support (1) est fabriqué par injection en une seule pièce, comprenant la face avant (B), les deux côtés (A), une extension centrée (C) de ladite face avant, des protrusions (21) avec des orifices pour la fixation au corps du véhicule, des pièces d'arrêt pour les pivots du mécanisme,
- l'élément d'entraînement des éléments coulissants (3) est un câble (2),
- l'extension (C) de la face avant loge le moteur de commande, fixé à elle dans certaines zones (13), elle sert également de protection (14) pour la bobine du câble,
- le câble (2) passe librement depuis la bobine du câble entre les éléments coulissants (3) et les angles (4, 6) de la face avant (B) et les extrémités (5, 7) des côtés, aux angles et aux extrémités desquels sont prévus des éléments de réorientation pour ledit câble,
- les extrémités (5, 7) des côtés sont pourvues de canaux latéraux avec des évidements (20) réalisés dans leurs parois horizontales supérieures au moyen desquels les éléments coulissants (3) sont montés dans le sens vertical.

2. Toit ouvrant avec cadre de support pour véhicule automobile, tel qu'il est revendiqué dans la revendication 1, **caractérisé en ce que** lorsque le cadre de support est fabriqué en plastique les éléments de réorientation du câble et les tubes d'écoulement (12) forment un seul élément avec le cadre lui-même.

3. Toit ouvrant avec cadre de support pour toits ouvrants de véhicule automobile, tel qu'il est revendiqué dans la revendication 1, **caractérisé en ce que** lorsque le cadre de support est fabriqué dans un alliage de métal les éléments de réorientation (15) et les tubes d'écoulement (16) font partie de pièces auxiliaires qui comportent les deux et qui sont fixées par des pattes d'attache (17) sur les orifices réalisés dans le cadre.

4. Toit ouvrant avec cadre de support pour véhicule automobile, tel qu'il est revendiqué dans la revendication 1, **caractérisé en ce que** le câble (2) est composé de trois segments de câble : un premier segment qui passe depuis la bobine jusqu'à l'un des éléments coulissants (3), en dépassant l'élément de réorientation de l'angle avant (4) et avec un ressort à l'extrémité connecté à l'élément coulissant ; un second segment (11) couplé à l'élément coulissant (3) qui dépasse un élément de réorientation (5) d'un côté, continuant jusqu'à un autre élément de réorientation à l'angle (4), différent de celui mentionné précédemment, continuant ensuite jusqu'à l'autre angle avant (6) où il est connecté par l'élément de réorientation correspondant à l'autre élément coulissant ; et un troisième segment de câble (10) qui passe de ce dernier élément coulissant avec un ressort couplé à lui et dépasse l'élément de réorientation (7) de ce côté, retournant jusqu'à un autre élément de réorientation à l'angle avant (6), différent de celui mentionné précédemment.

5. Toit ouvrant avec cadre de support pour véhicule automobile, tel qu'il est revendiqué dans les revendications précédentes, **caractérisé en ce qu'**il y a d'autres éléments de réorientation intermédiaires en plus de ceux des angles avant et des extrémités des côtés, si nécessaire.
